# EUROPEAN PATENT SPECIFICATION

(11) **EP 3 001 115 B1**
(45) Date of publication and mention of the grant of the patent: **31.03.2021**
(21) Application number: 15186414.7
(22) Date of filing: 23.09.2015
(51) Int. Cl.: F24F 11/30, G05B 15/02, H04L 29/08, F24F 11/62, F24F 110/50, H04L 12/28

(54) **METHOD AND DEVICE FOR CONTROLLING APPARATUS**
VERFAHREN UND VORRICHTUNG ZUR STEUERUNG EINER VORRICHTUNG
PROCÉDÉ ET DISPOSITIF DE CONTRÔLE D'UN APPAREIL

(30) Priority: 23.09.2014 CN 201410492058
(43) Date of publication of application: 30.03.2016
(73) Proprietor: Xiaomi Inc., Beijing 100085 (CN)
(72) Inventor: YANG, Yun, 100085 Haidian District (CN); REN, Qiao, 100085 Haidian District (CN); GAO, Ziguang, 100085 Haidian District (CN)
(74) Representative: Robson, Aidan John

(56) References cited:
- WO-A1-2013/113139
- WO-A1-2014/020879
- WO-A2-2011/090763
- CN-A- 102 193 525
- US-A1- 2013 174 646
- US-A1- 2014 082 177
- US-A1- 2014 188 287
- US-A1- 2014 266 669
- US-B1- 8 090 477

## Description

### TECHNICAL FIELD

The present invention generally relates to a smart home technology, and more particularly, to a method and a device for controlling an apparatus.

### BACKGROUND

With the gradual improvement of living standards, a home apparatus such as an air purifier or a water purifier may be installed in a house of a user. In the related art, the user usually controls whether to start the home apparatus by himself/herself, for example, when the user feels that his/her home environment is poor, he/she starts an air purifier. However, this way of control by the user not only causes a great inconvenience to the user, but also brings a poor use effect of the home apparatus. For example, the user may forget to focus on the environmental quality and does not turn on the air purifier, such that the air purifier does not function in time; or the user may not know that his/her surrounding environment deteriorates and does not use the air purifier, such that the home apparatus is not made effective use of and does not function fully.

US 2013/174646A1 discloses systems and methods for continuously monitoring residential air quality and providing a trend based analysis regarding various air pollutants. The system comprises an air quality monitor located in a residential house, wherein the air quality monitor is configured to measure the level of an air pollutant. The system also includes a server that is communicatively coupled to the air quality monitor, wherein the server is configured to generate a unique environmental fingerprint associated with the residential house.

### SUMMARY

The invention is defined by a method according to claim 1, and a cloud server according to claim 3. Further embodiments are defined by the dependent claims. With this invention, it is possible to use the home apparatus according to the object quality state, so as to realize the effective use of the home apparatus.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a diagram of a system architecture to which a method for controlling an apparatus is applied according to an exemplary embodiment.
Fig. 2 is a flow chart of a method for controlling an apparatus according to an exemplary embodiment.
Fig. 3 is a schematic diagram of an application operation in a method for controlling an apparatus according to an exemplary embodiment.
Fig. 4 is a flow chart of another method for controlling an apparatus according to an exemplary embodiment.
Fig. 5 is a schematic diagram of an application operation in another method for controlling an apparatus according to an exemplary embodiment.
Fig. 6 is a block diagram of a cloud server according to an exemplary embodiment.
Fig. 7 is a block diagram of another cloud server according to an exemplary embodiment.
Fig. 8 is a block diagram of a home control device according to an exemplary embodiment.
Fig. 9 is a block diagram of another home control device according to an exemplary embodiment.
Fig. 10 is a block diagram of a home apparatus according to an exemplary embodiment.
Fig. 11 is a block diagram of another home apparatus according to an exemplary embodiment.
Fig. 12 is a block diagram of a device according to an exemplary embodiment.
Fig. 13 is a block diagram of a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

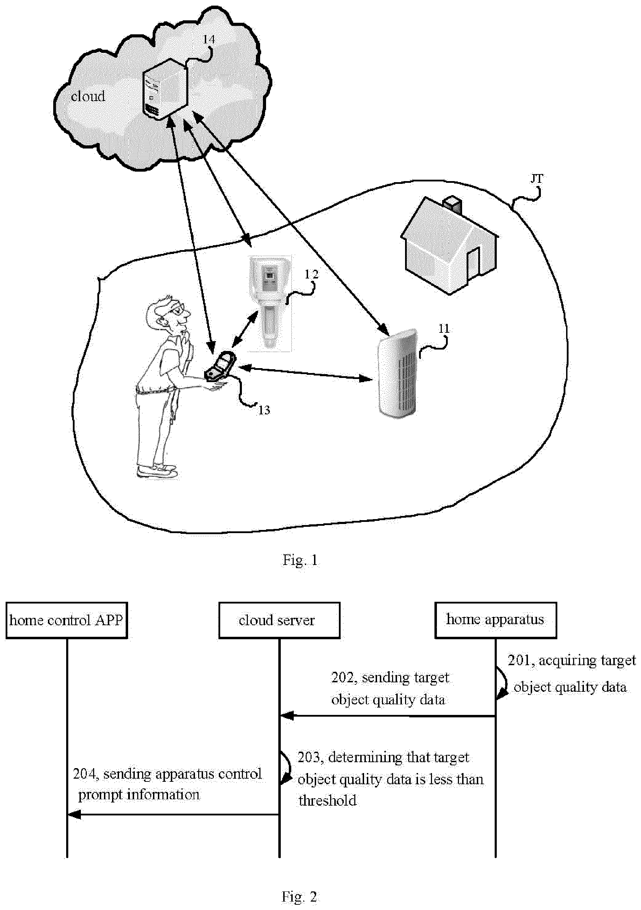

The control on a home apparatus according to an embodiment of the present disclosure includes analyzing some collected measurement data by a cloud server to obtain an analysis result, and performing a use control on the home apparatus according to the analysis result. In order that the following description of a control mode of the home apparatus is clearer and more easily understood, first, Fig. 1 shows a system architecture to which the control on the home apparatus is applied. Fig. 1 illustrates a house JT, assuming an air purifier 11 and a water purifier 12 are installed in the house JT and an owner of the house JT installs a "home control APP" in his/her mobile terminal such as a smart phone 12, in which the home control APP may be called a home control device. Fig. 1 further illustrates a cloud, in which a cloud server 14 is provided.

### Embodiment 1

In an embodiment of the present disclosure, the cloud server, the home apparatus and the home control device described above may execute a processing flow shown in Fig. 2, and Fig. 2 shows the processing of the three-party apparatuses.

In step 201, a home apparatus acquires target object quality data of a target object.

The home apparatus is configured to process the target object. As an example, the air purifier 11 is configured to purify air, so the air may be called the target object and the processing is purifying air. As another example, the water purifier 12 is configured to filter household water, so the household water may be called the target object and the processing is filtering.

The home apparatus may perform a quality measurement on the target object to obtain quality data of the target object, which is called target object quality data. For example, the air purifier 11 detects an air quality in the house to obtain air quality data, or the water purifier 12 detects a water quality of household water to obtain water quality data.

In step 202, the home apparatus sends the target object quality data to a cloud server.

After obtaining the target object quality data of the target object (e.g., air or water), the home apparatus sends the target object quality data to the cloud server 14. For example, the home apparatus may periodically report the quality data.

In step 203, the cloud server determines that the target object quality data is less than a threshold.

After receiving the target object quality data from the home apparatus, the cloud server determines whether the target object quality data is less than the threshold. For example, the cloud server may pre-store a water quality standard of Beijing city as the threshold, and compares the received target object quality data with the threshold. If the target object quality data is less than the threshold, it is indicated that the water quality is poor, and step 204 is executed. If the target object quality data is larger than the threshold, step 204 is not executed, and the flow is ended.

In step 204, the cloud server sends apparatus control prompt information to a home control device.

In this step, the home control device associated with the target object quality data includes the following cases.

As an example, the home control device (i.e. the home control APP) is installed in a mobile phone of an owner of a house in which a water purifier is installed. When detecting that water quality data reported by the water purifier is less than the threshold, which indicates that the water quality is poor, the cloud server sends apparatus control prompt information to the home control APP of the house where the water purifier is, and the apparatus control prompt information is configured to prompt a user of the home control APP to start the home apparatus belonging to the user. For example, the apparatus control prompt information is "water quality of your house being poor, please enhance filtration level", "water quality of your house being poor, please start water purifier", or the like.

As another example, no home apparatus is installed in a house where the home control device is. In this case, the cloud server performs a determination according to a water quality of a region where the house locates, for example, water quality data reported by other houses in the region is poor, and then the cloud server sends prompt information such as "water quality of the region where your house locates being poor, please install water purifier" to the home control APP of the house where no home apparatus is installed.

It should be noted that, the cloud server sends the apparatus control prompt information to the home control device according to address information on the home control device, and the address information is acquired by the cloud device from a notification message sent from the home control device, in which the notification message includes an information item including the address information on the home control device. The home apparatus may include a home apparatus bound to the home control device, or a home apparatus located in a specified region where the home control device is. For example, the fact that the cloud server in the above example sends the apparatus control prompt information to the home control APP of the house where no home apparatus is installed is determined according to data from other home apparatuses in a region where the home control APP is (such as Haidian District).

No matter which one of the above cases, the apparatus control prompt information sent from the cloud server is configured to prompt a user of the home control device to start the home apparatus belonging to the user for processing the target object, for example, to prompt the user to use a home apparatus with a better quality, to prompt the user to start the home apparatus, to prompt the user to install a home apparatus, or the like. Even if the user forgets to focus on the water quality or air quality and does not start the home apparatus, the cloud server may prompt the user to start the home apparatus, thus facilitating the effective use of the home apparatus.

### Embodiment 2

More particularly, in a particular implementation, a home apparatus such as a water purifier and an air purifier installed in a house may be bound to the house, and the solution is provided as follows:

Assuming a family member of a family installs a "home control APP" (i.e. home control device) in his/her mobile phone, after the home control APP is started, a house ID (i.e. house identifier) of a house where the user of the home control APP lives will be generated automatically, for example, the house ID may be a random character string "0111qjy". After being generated, the house ID is stored in the home control APP, and subsequently may be carried every time the home control APP sends a message to the cloud server.

Furthermore, each APP has corresponding address information, and the function of the address information is enabling the cloud server to send a message to the APP according to the address information when the cloud server intends to send the message to the APP. For example, the address information is APP ID. In practical use, a certain family member may set two accounts for his APP, and then both the two accounts may correspond to the APP ID. Certainly, besides the above address information, the APP has its own identifier, which is equivalent to a title of the APP. Alternatively, the APP may have one identifier performing not only the distinguishing function but also the address function.

The home control APP sends a notification message to the cloud server, and the notification message may carry the following information items: address information on the home control APP, and a house identifier of a house to which the APP belongs. After receiving the above information, the cloud server records a corresponding relation between the information items. Referring to Table 1, a relation recording manner is exemplified.

**Table 1. home control corresponding table**

| house ID | GPS location information | APP | apparatus information on home apparatus | |
|---|---|---|---|---|
| house A (0111qjy) | | yy01 | apparatus type | apparatus identifier |
| | | vv02 | | |
| | | yy03 | | |
| | | | | |
| | | | | |
| house B | | | | |

As indicated above, Table 1 includes various information. When the APP reports the notification message, a part of information may be reported, for example, the APP only reports the house identifier and the APP identifier (address information). In Table 1, two houses are exemplified, i.e. house A and house B, and the two houses have similar information recording structures, so only the information recording structure of house A is shown in detail.

For example, a house ID of house A is "0111qjy", and there are three family members in a family corresponding to house A, an APP of one family member carries an identifier "yy01" of the APP besides the house ID upon reporting, APPs of the other two family members carry identifiers "yy02" and "yy03" upon reporting respectively. Moreover, assuming no smart home apparatus is installed in house A, the cloud server will first record a corresponding relation between the house ID of house A and APP ID of each family member.

Alternatively, assuming a water purifier and two air purifiers are installed in house A, an APP in a mobile phone of a user may perform an apparatus discovery of these home apparatuses. That is, the APP may detect a signal from each home apparatus. Alternatively, in a particular implementation, the APP may send an apparatus discovery request to a home apparatus, the home apparatus returns a discovery response to the APP after receiving the apparatus discovery request, such that the APP may know the existence of the home apparatus and thus the communication connection between the APP and the home apparatus is established.

The home apparatus may send apparatus information to the APP, and the apparatus information may include an apparatus type of the home apparatus and an apparatus identifier of the home apparatus. The apparatus type may be configured to indicate, for example, "the apparatus is a water purifier", or "the apparatus is an air purifier". Specifically, for example, "water purifier" may be denoted as "01", and "air purifier" may be denoted as "02". The apparatus identifier is configured to distinguish individual apparatuses. For example, when two air purifiers are used in a house and the apparatus types of the two air purifiers are identical, the two air purifiers may be distinguished from each other by the apparatus identifiers thereof, for example, the apparatus identifier of one air purifier is "aa" and the apparatus identifier of the other air purifier is "bb". The home apparatus sends both the apparatus identifier and the apparatus type to the APP.

The notification message sent from the APP to the cloud server may include the following information items: address information on the home control APP, a house identifier of a house to which the APP belongs, an apparatus type of a home apparatus in the house, and an apparatus identifier of the home apparatus. The cloud server records a corresponding relation between these information items, as shown in Table 2.

**Table 2. home control corresponding table**

| house ID | GPS location information | APP | apparatus information on home apparatus | |
|---|---|---|---|---|
| house A (0111qjy) | | yy01 | apparatus type | apparatus identifier |
| | | yy02 | water purifier (01) | cc |
| | | yy03 | | |
| | | | air purifier (02) | aa |
| | | | | bb |
| house B | | | | |

At this time, at the cloud server side, the following corresponding relation between the information items is recorded. In house A, there are three home control APPs, i.e. yy01, yy02 and yy03, and there are provided two types of home apparatuses including a water purifier and two air purifiers aa and bb.

It should be noted that, when there are three APPs in a house and the three APPs generates house IDs respectively, the house IDs generated by the three APPs may be different, and then the house IDs may be merged. Specifically, still taking three APPs shown in Table 2 as an example, it is assumed that a house ID generated by the APP "yy01" and reported to the cloud server is "0111qjy", a house ID generated by the APP "yy02" and reported to the cloud server is "0112qjy", and a house ID generated by the APP "yy03" and reported to the cloud server is "0113qjy". If the three family members intend to inform the cloud server that they belong to the same family, the family member using the APP "yy01" may operate his/her own mobile phone, for example, click an option "house ID merging" on the APP, which is equivalent to receiving a house identifier merging indicator by the APP, so as to perform a merging operation.

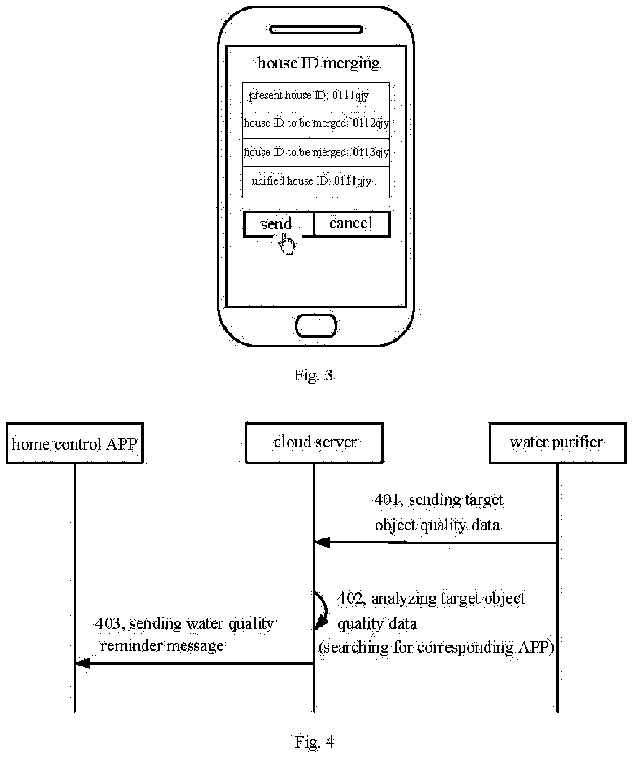

The APP may enter an operation interface for the house ID merging. Referring to Fig. 3, a schematic diagram of an operation of a mobile phone is shown. The other two family members notify the family member using the APP "yy01" of the house IDs of their respective APPs, the family member using the APP "yy01" inputs the house IDs of the other family members into boxes for house IDs to be merged. Moreover, the user selects one of the individual house identifiers as a unified house identifier, for example, selects "0111qjy" as the unified house identifier. The unified house identifier may be input by the user, or may be selected using a selection marker, for example, drawing a check mark after "0111qjy". After the unified house identifier is determined, the above information is sent to the cloud server.

After receiving the above information, the cloud server performs the merging operation on the house IDs, so as to unify the house IDs of the three APPs as 0111qjy, i.e. the three APPs are bound to house A.

Based on the above scene, taking Fig. 4 as an example, the control on an apparatus will be described. Fig. 4 is a flow chart of a method for controlling an apparatus according to an exemplary embodiment. The method includes the following steps.

In step 401, a water purifier sends target object quality data to a cloud server.

The target object quality data is water quality data obtained by detecting a water quality of house A by the water purifier. A message sent from the water purifier to the cloud server not only includes the water quality data, but also may include an apparatus type and an apparatus identifier of the water purifier. The apparatus type and the apparatus identifier may be merged into one character string, e.g., "01cc", which includes the apparatus type "01" (indicating the apparatus is a water purifier) and the apparatus identifier "cc".

In step 402, the cloud server analyzes the target object quality data.

For example, the cloud server compares the water quality data with a threshold, and if it is found that the water quality is poor, step 403 is executed, otherwise the cloud server may end the flow.

In step 403, the cloud server searches for a house APP corresponding to the water purifier, and sends a water quality reminder message to the house APP.

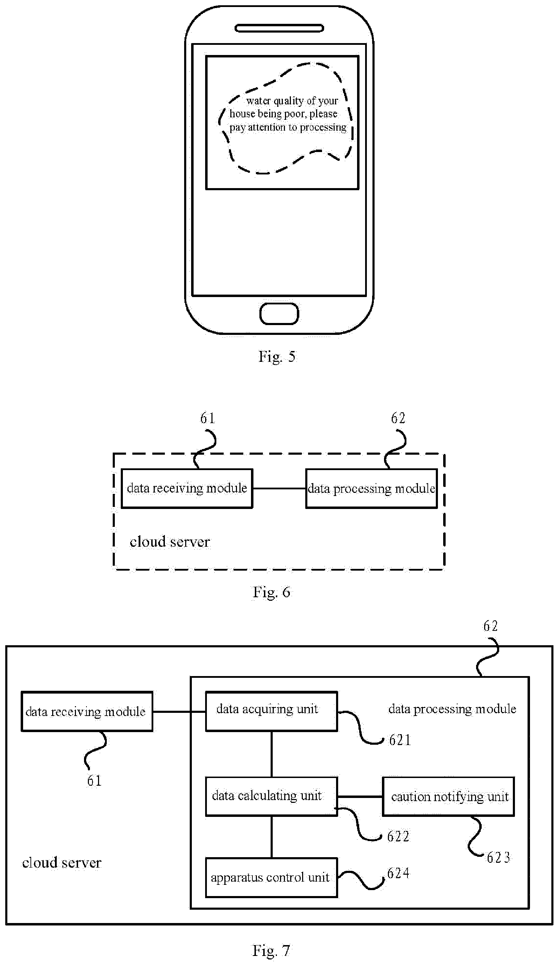

In this embodiment, when the cloud server finds that the water quality is poor and intends to remind a family member of a house where the water purifier is of the water quality, the cloud server may search for the corresponding relation in Table 2 to obtain any APP of the house, and sends a water quality reminder message to the APP according to the address information previously reported by the APP. For example, referring to Fig. 5, displaying "water quality of your house being poor, please pay attention to processing" on a mobile phone interface. In this way, it is possible to remind a user that the current water purifier has a weak water purification capability and cannot purify water thoroughly, and the user may use a water purifier with a strong water purification capability.

### Embodiment 3

In this embodiment, the information item of the notification message reported by the APP to the cloud server further includes geographical location information on a house. Specifically, when the APP interacts with a smart home apparatus such as an air purifier, the APP may sense whether the connection is a remote connection or a local connection. If the connection is a local connection via a local network and thus the APP may be regarded to be in a house, then the APP may start a GPS positioning to acquire GPS geographical location information. Since the house occupies a small area, the GPS geographical location information obtained by the GPS positioning may be used as the geographical location information on the house, and it is considered that the geographical location information on the house measured by APPs of family members is substantially identical.

The APP sends to the cloud server information such as a house ID and an APP identifier together with the geographical location information. Taking the above house A as an example, the cloud server will fill the GPS geographical location information (not shown in Table 2) reported by the APP "yy01" in a cell of GPS location information corresponding to house A in Table 2.

After adding the geographical location information on the house, the cloud server may analyze the target object quality data in more alternative manners. Specifically, take the following Table 3 as an example, the analysis on the target object quality data may be illustrated as follows.

**Table 3. home control corresponding table**

| house ID | GPS location information | APP | apparatus information on home apparatus | | |
|---|---|---|---|---|---|
| house A (0111qjy) | Beijing, Haidian | yy01 | apparatus type | apparatus identifier | target object quality data |
| | | | water purifier (01) | cc | *** |
| | | | air purifier (02) | aa | *** |
| house B | Chaoyang, Beijing | zz01 | water purifier (01) | dd | *** |
| house C | Haidian, Beijing | zy02 | water purifier (01) | ee | *** |
| house D | Haidian, Beijing | zy03 | water purifier (01) | ff | *** |
| house E | Haidian, Beijing | Yy06 | | | |

Referring to Table 3, the geographical location information reported by the APP may be information on the longitude and latitude of the house. The cloud server may convert the information on the longitude and latitude of the house to a practical map region, for example, it may be determined that house A is located in Haidian district, Beijing, and house B is located in Chaoyang district, Beijing. Each house has target object quality data reported by the APP.

Assuming the analysis on water quality data is to be performed, the cloud server will select data in the same region, and obtains several houses (including house A, house C and house D) in a specified region such as Haidian district, Beijing according to the GPS location information in Table 3. Then, the cloud server selects data of water purifiers in these houses, specifically, according to the apparatus type "01" of the water purifier, the cloud server selects data of home apparatuses of the same apparatus type (e.g., water purifiers), and these data may be called the target object quality data. The cloud server may calculate region quality data according to these target object quality data, for example, by averaging, so as to obtain an average water quality of Haidian district, Beijing, and it is assumed that the cloud server determines that the average water quality of this region is less than a predetermined water quality threshold.

In this case, the cloud server may send a water quality reminder message such as "the water quality of this region being poor" to users in this region, for example, to the APP "zy02" of house C or the APP "zy03" of house D.

Furthermore, the cloud server may also remind a house in the same region without a water purifier of the water quality. For example, referring to Table 3, the geographical location information on house E indicates house E is located in Haidian district, Beijing, however, there is neither apparatus type nor apparatus identifier of a home apparatus corresponding to house E, which indicates no smart home apparatus is installed in house E. This is because if a home apparatus is installed in house E, the APP "Yy06" of house E will perform an apparatus discovery and report apparatus information. In this case, the cloud server may also send apparatus control prompt information to the APP of house E, and the apparatus control prompt information may be configured to prompt the house E to install a home apparatus or to give a prompt of an object quality, for example, to prompt the user that the water quality of a region where his/her house locates is poor and the user needs to pay attention to water pollution.

Similarly, the cloud server may also determine an air quality of a region according to air quality data reported by air purifiers in the region. When the air quality of the region is lower than a standard, it is considered that air in the region is polluted. The cloud server finds a user in the region without using an air purifier, and pushes a reminder message to the user so as to remind the user of air pollution. Alternatively, the user may start to install an air purifier in his/her house after seeing the reminder message.

Furthermore, the home apparatus may also report an apparatus state (e.g., a turn-on state or a turn-off state) to the cloud server. In this way, if the cloud server determines that the air quality of a region is poor and finds that an air purifier is installed in a house in the region but is in a turn-off state, then the cloud server may also send a reminder notice to an APP of the house, so as to remind a user of the house to turn on the air purifier.

### Embodiment 4

In the above embodiments, when determining that the water quality is poor or air is polluted, the cloud server sends a reminder notice to the APP of the family member, for example, reminding the user that the water quality is poor, such that the user controls the home apparatus to start or replaces the home apparatus by himself/herself. Further, in this embodiment, the cloud server may also control the home apparatus directly, for example, start the home apparatus.

As an example, assuming the cloud server determines that the region air quality of Haidian district, Beijing is poor, the cloud server may send an apparatus control instruction to the air purifier of house A in Table 3 directly, and the apparatus control instruction is configured to instruct the air purifier to start. After receiving the apparatus control instruction, the air purifier starts according to the apparatus control instruction. However, in this case, the cloud server may send a notification message to the APP of the user, such that the user may know that the air purifier has been turned on.

As another example, considering that it is best to start the air purifier when the user is at home, which meets energy saving requirements, the cloud server may first determine whether the user is at home before sending a start instruction, and if the user is at home, the cloud server sends the start instruction to the APP. Specifically, the cloud server may send a positioning request to the APP of the user of the house so as to request that the APP start a positioning function, and the APP starts the positioning function to acquire GPS location information and reports the GPS location information to the cloud server. If the received GPS location information coincides with pre-stored geographical location information corresponding to the house, the cloud server determines that the user is at home.

As described above, the cloud server directly controls the home apparatus to start, however, as yet another example, if the user does not wish that a home apparatus of his/her own house is controlled by the cloud server, it is possible to provide options for the user. Specifically, before starting the home apparatus, the cloud server may first send to the APP of the user a notification message, for example, "a current air quality being poor, whether is the cloud server allowed to start the air purifier automatically, please". If the user is not at home but intends to start the air purifier, he/she may agree, and the cloud server may start the air purifier. If the user does not agree, the cloud server will not send a start instruction to the home apparatus. Moreover, the cloud server may also allow the user to close an apparatus controlling function of the cloud server. For example, the user may send a message to the cloud server via the APP, so as to instruct the cloud server to stop controlling the home apparatus.

In the following, the structure of the apparatus involved in the method for controlling the apparatus according to embodiments of the present disclosure will be provided. With respect to the structure of the apparatus, the specific operation modes of individual modules therein have been described in detail in the embodiments regarding the methods for controlling the apparatus, which will not be elaborated herein.

### Embodiment 5

Fig. 6 is a block diagram of a cloud server according to an exemplary embodiment. Referring to Fig. 6, the cloud server includes a data receiving module 61 and a data processing module 62.

The data receiving module 61 is configured to receive from a home control device a notification message including an information item including address information on the home control device, and to receive target object quality data from a home apparatus configured to process a target object. The target object quality data is obtained by performing a quality measurement on the target object by the home apparatus, and the home apparatus includes a home apparatus bound to the home control device, or a home apparatus located in a specified region where the home control device is.

The data processing module 62 is configured to send apparatus control prompt information to the home control device according to the address information on the home control device when determining that the target object quality data is less than a threshold, in which the apparatus control prompt information is configured to prompt a user of the home control device to start the home apparatus belonging to the user for processing the target object.

Alternatively, the data receiving module 61 is further configured to receive from the home control device a notification message including at least one of the following information items: a house identifier of a house to which the home control device belongs, geographical location information on the house, and an apparatus type and an apparatus identifier of a home apparatus in the house.

Fig. 7 is a block diagram of another cloud server according to an exemplary embodiment. As shown in Fig. 7, based on the structure shown in Fig. 6, the data processing module 62 of the cloud server includes a data acquiring unit 621, a data calculating unit 622, and a caution notifying unit 623.

The data acquiring unit 621 is configured to acquire a plurality of target object quality data from the target object quality data received by the data receiving module, in which apparatus types of the home apparatuses corresponding to the plurality of target object quality data are identical, and geographical location information on houses corresponding to the home apparatuses indicates the houses are in a specified region.

The data calculating unit 622 is configured to obtain region quality data corresponding to the specified region according to the plurality of target object quality data, and to determine that the region quality data is less than the threshold.

The caution notifying unit 623 is configured to send the apparatus control prompt information to the home control device when the house of the user of the home control device is in the specified region, no home apparatus is bound to the home control device, and the data calculating unit determines that the region quality data is less than the threshold, to prompt the user of the home control device to add a home apparatus.

Alternatively, the data processing module 62 may further include an apparatus control unit 624 configured to send an apparatus control instruction to the home apparatus, such that the home apparatus is controlled according to the apparatus control instruction.

### Embodiment 6

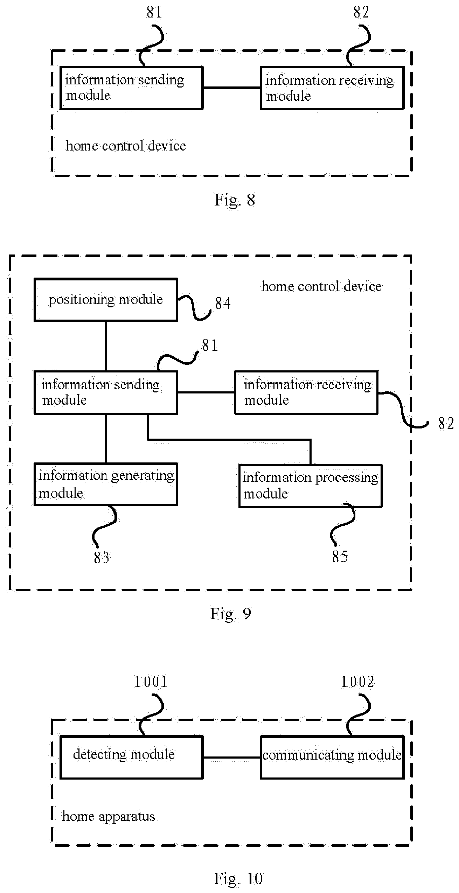

Fig. 8 is a block diagram of a home control device according to an exemplary embodiment. For example, the home control device is a home control APP installed in a mobile phone. Referring to Fig. 8, the home control device includes an information sending module 81 and an information receiving module 82.

The information sending module 81 is configured to send to a cloud server a notification message including an information item including address information on the home control device.

The information receiving module 82 is configured to receive apparatus control prompt information sent from the cloud server according to the address information. The apparatus control prompt information is configured to prompt a corresponding user to start a home apparatus belonging to the user for processing a target object, and the apparatus control prompt information is sent from the cloud server when target object quality data of the target object reported by the home apparatus and received by the cloud server is less than a threshold. The home apparatus reporting the target object quality data includes a home apparatus bound to the home control device, or other home apparatuses located in a specified region where the home control device is.

Fig. 9 is a block diagram of another home control device according to an exemplary embodiment. As shown in Fig. 9, based on the structure shown in Fig. 8, the home control device further includes an information generating module 83, a positioning module 84, and an information processing module 85.

The information generating module 83 is configured to generate a house identifier of a house to which the home control device belongs, and to carry the house identifier in the notification message, such that the cloud server records a corresponding relation between the individual information items.

The positioning module 84 is configured to acquire geographical location information on the house, and to carry the geographical location information on the house in the notification message.

Alternatively, the information sending module 81 is further configured to carry apparatus information sent from a home apparatus in a house of the user to which the home control device belongs and geographical location information on the house in the notification message, in which the apparatus information includes an apparatus type of the home apparatus, such that the cloud server obtains region quality data of a specified region where the house is according to the geographical location information and the apparatus type, and sends the apparatus control prompt information when the region quality data is less than the threshold.

Alternatively, the information processing module 85 is configured to receive a house identifier merging indicator, to acquire individual house identifiers to be merged according to the house identifier merging indicator, and to use one of the individual house identifiers as a unified house identifier. The information sending module 82 is further configured to send the unified house identifier to the cloud server, such that the cloud server changes the individual house identifiers to the unified house identifier.

### Embodiment 7

Fig. 10 is a block diagram of a home apparatus according to an exemplary embodiment. Referring to Fig. 10, the home apparatus includes a detecting module 1001 and a communicating module 1002.

The detecting module 1001 is configured to perform a quality measurement on a target object to obtain target object quality data of the target object.

The communicating module 1002 is configured to send the target object quality data to a cloud server, such that the cloud server sends apparatus control prompt information to a home control device according to address information carried in a notification message reported from the home control device to the cloud device when determining that the target object quality data is less than a threshold, in which the apparatus control prompt information is configured to prompt a user of the home control device to start the home apparatus belonging to the user for processing the target object, and the home control device includes a home control device bound to the home apparatus, or other home control devices located in a specified region where the home apparatus is.

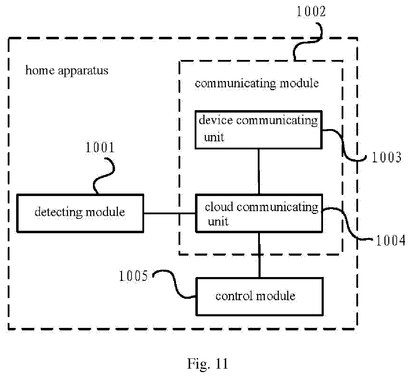

Fig. 11 is a block diagram of another home apparatus according to an exemplary embodiment. As shown in Fig. 11, based on the structure shown in Fig. 10, the communicating module 1002 of the home apparatus may include a device communicating unit 1003 and a cloud communicating unit 1004.

The device communicating unit 1003 is configured to send apparatus information including an apparatus type and an apparatus identifier of the home apparatus to the home control device, such that the home control device sends the apparatus information to the cloud server. The cloud communicating unit 1004 is configured to receive an apparatus control instruction from the cloud server.

Alternatively, the home apparatus further includes a control module 1005 configured to control the apparatus according to the apparatus control instruction received by the cloud communicating unit 1004.

### Embodiment 8

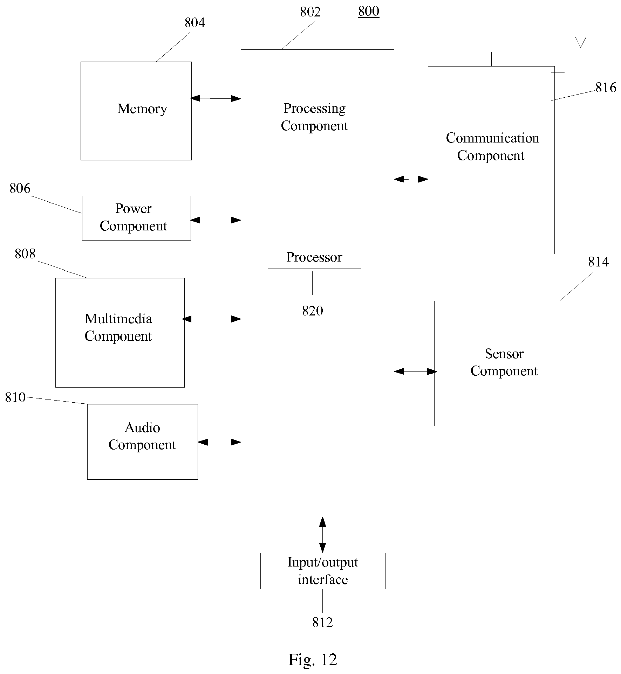

Fig. 12 is a block diagram of a device 800 according to an exemplary embodiment. For example, the device 800 may be a mobile phone, a computer, a digital broadcast terminal, a message transceiver, a game console, a tablet, a medical device, an exercise equipment, a personal digital assistant, and the like.

Referring to Fig. 12, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

In this embodiment, the memory 804 stores instructions executable by the processor. The processor is configured to perform following operations by executing the instructions: sending to a cloud server a notification message including an information item including address information on the device 800; and receiving apparatus control prompt information sent from the cloud server according to the address information, in which the apparatus control prompt information is configured to prompt a corresponding user to start a home apparatus belonging to the user for processing a target object, the apparatus control prompt information is sent from the cloud server when target object quality data of the target object reported by the home apparatus and received by the cloud server is less than a threshold, and the home apparatus reporting the target object quality data includes a home apparatus bound to the device 800, or other home apparatuses located in a specified region where the device 800 is.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 808 includes a front-facing camera and/or a rear-facing camera. The front-facing camera and/or the rear-facing camera may receive external multimedia data while the device 800 is in an operation mode, such as a photographing mode or a video mode. Each of the front-facing camera and the rear-facing camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments on various aspects of the device 800. For instance, the sensor component 814 may detect an open/closed status of the device 800 and relative positioning of components (e.g., the display and the keypad of the device 800). The sensor component 814 may also detect a change in position of the device 800 or of a component in the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

### Embodiment 9

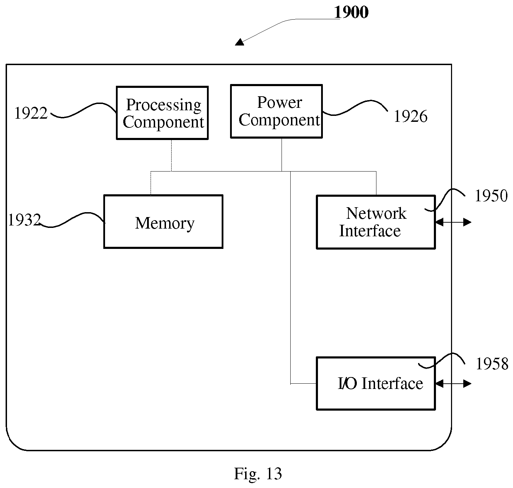

Fig. 13 is a block diagram of a device 1900 according to an exemplary embodiment. For example, the device 1900 may be configured as a server. Referring to Fig. 13, the device 1900 includes a processing component 1922 including one or more processors, and a memory resource represented by a memory 1932 and configured to store instructions (e.g., application programs) executable by the processing component 1922. The application programs stored in the memory 1932 may include one or more modules each corresponding to a set of instructions. The processing component 1922 is configured to execute instructions so as to perform a method including: receiving from a home control device a notification message including an information item including address information on the home control device; receiving target object quality data from a home apparatus configured to process a target object, in which the target object quality data is obtained by performing a quality measurement on the target object by the home apparatus, and the home apparatus includes a home apparatus bound to the home control device, or a home apparatus located in a specified region where the home control device is; sending apparatus control prompt information to the home control device according to the address information on the home control device when determining that the target object quality data is less than a threshold, in which the apparatus control prompt information is configured to prompt a user of the home control device to start the home apparatus belonging to the user for processing the target object.

The device 1900 may also include a power supply 1926 configured to perform a power management of the device 1900, a wired or wireless network interface 1950 configured to connect the device 1900 to a network, and an input/output (I/O) interface 1958. The device 1900 may be operated based on an operating system stored in the memory 1932, such as Windows ServerTM, Mac OS XTM, UnixTM, LinuxTM, FreeBSDTM, or the like.

In exemplary embodiments of the present disclosure, there is also provided a non-transitory computer-readable storage medium including instructions, such as the memory 804 including instructions. The above instructions are executable by the processor 820 in the device 800, for performing the above-described methods. For example, the method includes: sending to a cloud server a notification message including an information item including address information on a home control device; and receiving apparatus control prompt information sent from the cloud server according to the address information, in which the apparatus control prompt information is configured to prompt a corresponding user to start a home apparatus belonging to the user for processing a target object, the apparatus control prompt information is sent from the cloud server when target object quality data of the target object reported by the home apparatus and received by the cloud server is less than a threshold, and the home apparatus reporting the target object quality data includes a home apparatus bound to the home control device, or other home apparatuses located in a specified region where the home control device is. For example, the non-transitory computer-readable storage medium may be a ROM, a RAM, a CD-ROM, a magnetic tape, a floppy disc, an optical data storage device, and the like.

## Claims

1. A method for controlling an apparatus, comprising:
receiving from a home control device a notification message comprising an information item comprising address information on the home control device;
receiving (202, 401) target object quality data from a home apparatus configured to process a target object, wherein the target object quality data is obtained by performing a quality measurement on the target object by the home apparatus, and the home apparatus comprises a home apparatus bound to the home control device, or a home apparatus located in a specified region where the home control device is;
sending (204) apparatus control prompt information to the home control device according to the address information on the home control device when determining that the target object quality data is less than a threshold, wherein the apparatus control prompt information is configured to prompt a user of the home control device to start the home apparatus belonging to the user for processing the target object; wherein the home apparatus for processing the target object is an air purifier (11) for purifying air, or a water purifier (12) for purifying water, wherein the information item of the notification message further comprises geographical location information on a house of the user of the home control device, and an apparatus type of a home apparatus in the house;
wherein determining that the target object quality data is less than the threshold comprises:
acquiring (201) a plurality of target object quality data, in which the apparatus types of the home apparatuses corresponding to the plurality of target object quality data are identical, and the geographical location information on the houses corresponding to the home apparatuses indicates the houses are in a specified region;
obtaining region quality data corresponding to the specified region according to the plurality of target object quality data; and
determining that the region quality data is less than the threshold;
wherein when determining that the target object quality data is less than the threshold, the method further comprises:
sending an apparatus control instruction to the home apparatus, such that the home apparatus is controlled according to the apparatus control instruction; and
sending (403) a water quality reminder message to users in the region when the cloud server finds that the water quality is poor.

2. The method of claim 1, wherein sending (204) apparatus control prompt information to the home control device according to the address information on the home control device comprises:
if the house of the user of the home control device is in the specified region and no home apparatus is bound to the home control device, sending the apparatus control prompt information to the home control device when the region quality data is less than the threshold, to prompt the user of the home control device to add a home apparatus.

3. A cloud server, comprising:
a data receiving module (61) configured to receive from a home control device a notification message comprising an information item comprising address information on the home control device, and to receive target object quality data from a home apparatus configured to process a target object, wherein the target object quality data is obtained by performing a quality measurement on the target object by the home apparatus, and the home apparatus comprises a home apparatus bound to the home control device, or a home apparatus located in a specified region where the home control device is;
a data processing module (62) configured to send apparatus control prompt information to the home control device according to the address information on the home control device when determining that the target object quality data is less than a threshold, wherein the apparatus control prompt information is configured to prompt a user of the home control device to start the home apparatus belonging to the user for processing the target object; wherein the data processing module (62) comprises:
a data acquiring module (621) configured to acquire a plurality of target object quality data from the target object quality data received by the data receiving module (61), in which apparatus types of the home apparatuses corresponding to the plurality of target object quality data are identical, and geographical location information on houses corresponding to the home apparatuses indicates the houses are in a specified region;
a data calculating module (622) configured to obtain region quality data corresponding to the specified region according to the plurality of target object quality data, and to determine that the region quality data is less than the threshold; and
a caution notifying module (623) configured to send the apparatus control prompt information to the home control device when the house of the user of the home control device is in the specified region, no home apparatus is bound to the home control device, and the data calculating module (622) determines that the region quality data is less than the threshold, to prompt the user of the home control device to add a home apparatus;
wherein the data processing module (62) further comprises:
an apparatus control module (624) configured to send an apparatus control instruction to the home apparatus, such that the home apparatus is controlled according to the apparatus control instruction, and to send a water quality reminder message to users in the region when the cloud server finds that the water quality is poor.

## Patentansprüche

1. Verfahren zum Steuern einer Vorrichtung, das Folgendes beinhaltet:
Empfangen, von einem Heimsteuergerät, einer Mitteilungsnachricht, die ein Informationselement umfasst, das Adressinformationen über das Heimsteuergerät umfasst;
Empfangen (202, 401) von Zielobjektqualitätsdaten von einer Heimvorrichtung, die zum Verarbeiten eines Zielobjekts konfiguriert ist, wobei die Zielobjektqualitätsdaten durch Ausführen einer Qualitätsmessung am Zielobjekt durch die Heimvorrichtung erhalten werden und die Heimvorrichtung eine an das Heimsteuergerät gebundene Heimvorrichtung oder eine Heimvorrichtung umfasst, die sich in einer bestimmten Region befindet, in der sich das Heimsteuergerät befindet;
Senden (204) von Vorrichtungssteuerungs-Aufforderungsinformationen an das Heimsteuergerät gemäß den Adressinformationen über das Heimsteuergerät, wenn festgestellt wird, dass die Zielobjektqualitätsdaten kleiner als ein Schwellenwert sind, wobei die Vorrichtungssteuerungs-Aufforderungsinformationen zum Auffordern eines Benutzers des Heimsteuergeräts, die dem Benutzer gehörende Heimvorrichtung zum Starten zur Verarbeitung des Zielobjekts konfiguriert sind; wobei die Heimvorrichtung zur Verarbeitung des Zielobjekts ein Luftreiniger (11) zum Reinigen von Luft oder ein Wasserreiniger (12) zum Reinigen von Wasser ist, wobei
das Informationselement der Mitteilungsnachricht ferner geographische Standortinformationen über ein Haus des Benutzers des Heimsteuergeräts und einen Vorrichtungstyp einer Heimvorrichtung in dem Haus umfasst;
wobei das Feststellen, dass die Zielobjektqualitätsdaten kleiner als der Schwellenwert sind, Folgendes beinhaltet:
Erfassen (201) mehrerer Zielobjektqualitätsdaten, bei denen die Vorrichtungstypen der Heimvorrichtungen entsprechend den mehreren Zielobjektqualitätsdaten identisch sind und die geographischen Standortinformationen über die Häuser entsprechend den Heimvorrichtungen anzeigen, dass sich die Häuser in einer bestimmten Region befinden;
Einholen von Regionsqualitätsdaten entsprechend der bestimmten Region gemäß den mehreren Zielobjektqualitätsdaten; und
Feststellen, dass die Regionsqualitätsdaten kleiner als der Schwellenwert sind;
wobei, wenn festgestellt wird, dass die Zielobjektqualitätsdaten kleiner als der Schwellenwert sind, das Verfahren ferner Folgendes beinhaltet:
Senden eines Vorrichtungssteuerbefehls zu der Heimvorrichtung, so dass die Heimvorrichtung gemäß dem Vorrichtungssteuerbefehl gesteuert wird; und
Senden (403) einer Wasserqualitäts-Erinnerungsnachricht an Benutzer in der Region, wenn der Cloud-Server feststellt, dass die Wasserqualität schlecht ist.

2. Verfahren nach Anspruch 1, wobei das Senden (204) von Vorrichtungssteuerungs-Aufforderungsinformationen zum Heimsteuergerät gemäß den Adressinformationen über das Heimsteuergerät Folgendes beinhaltet:
Senden, wenn sich das Haus des Benutzers des Heimsteuergeräts in der bestimmten Region befindet und keine Heimvorrichtung an das Heimsteuergerät gebunden ist, der Vorrichtungssteuerungs-Aufforderungsinformationen an das Heimsteuergerät, wenn die Regionsqualitätsdaten kleiner als der Schwellenwert sind, um den Benutzer des Heimsteuergeräts aufzufordern, eine Heimvorrichtung hinzuzufügen.

3. Cloud-Server, der Folgendes umfasst:
ein Datenempfangsmodul (61), konfiguriert zum Empfangen, von einem Heimsteuergerät, einer Mitteilungsnachricht, die ein Informationselement umfasst, das Adressinformationen über das Heimsteuergerät umfasst, und zum Empfangen von Zielobjektqualitätsdaten von einer zum Verarbeiten eines Zielobjekts konfigurierten Heimvorrichtung empfängt, wobei die Zielobjektqualitätsdaten durch Ausführen einer Qualitätsmessung an dem Zielobjekt durch die Heimvorrichtung erhalten werden, und die Heimvorrichtung eine an das Heimsteuergerät gebundene Heimvorrichtung oder eine Heimvorrichtung umfasst, die sich in einer bestimmten Region befindet, in der sich das Heimsteuergerät befindet;
ein Datenverarbeitungsmodul (62), konfiguriert zum Senden von Vorrichtungssteuerungs-Aufforderungsinformationen an das Heimsteuergerät gemäß den Adressinformationen über das Heimsteuergerät, wenn festgestellt wird, dass die Zielobjektqualitätsdaten kleiner als ein Schwellenwert sind, wobei die Vorrichtungssteuerungs-Aufforderungsinformationen zum Auffordern eines Benutzers des Heimsteuergeräts konfiguriert sind, die dem Benutzer gehörende Heimvorrichtung zur Verarbeitung des Zielobjekts zu starten; wobei das Datenverarbeitungsmodul (62) Folgendes umfasst:
ein Datenerfassungsmodul (621), das zum Erfassen mehrerer Zielobjektqualitätsdaten aus den vom Datenempfangsmodul (61) empfangenen Zielobjektqualitätsdaten konfiguriert ist, wobei Vorrichtungstypen der Heimvorrichtungen entsprechend den mehreren Zielobjektqualitätsdaten identisch sind und geografische Standortinformationen über Häuser entsprechend den Heimvorrichtungen anzeigen, dass sich die Häuser in einer bestimmten Region befinden;
ein Datenberechnungsmodul (622), konfiguriert zum Einholen von Regionsqualitätsdaten entsprechend der bestimmten Region gemäß den mehreren Zielobjektqualitätsdaten und zum Feststellen, dass die Regionsqualitätsdaten kleiner als der Schwellenwert sind; und
ein Warnungsmitteilungsmodul (623), das zum Senden der Vorrichtungssteuerungs-Aufforderungsinformationen zum Heimsteuergerät konfiguriert ist, wenn sich das Haus des Benutzers des Heimsteuergeräts in der bestimmten Region befindet, keine Heimvorrichtung an das Heimsteuergerät gebunden ist und das Datenberechnungsmodul (622) feststellt, dass die Regionsqualitätsdaten kleiner als der Schwellenwert sind, um den Benutzer des Heimsteuergeräts aufzufordern, eine Heimvorrichtung hinzuzufügen;
wobei das Datenverarbeitungsmodul (62) ferner Folgendes umfasst:
ein Vorrichtungssteuermodul (624), konfiguriert zum Senden eines Vorrichtungssteuerbefehls zur Heimvorrichtung ist, so dass die Heimvorrichtung gemäß dem Vorrichtungssteuerbefehl gesteuert wird, und zum Senden einer Wasserqualitäts-Erinnerungsnachricht an Benutzer in der Region, wenn der Cloud-Server feststellt, dass die Wasserqualität schlecht ist.

## Revendications

1. Procédé de commande d'un appareil, comprenant :
la réception, à partir d'un dispositif de commande domestique d'un message de notification comprenant un élément d'informations comprenant des informations d'adresse du dispositif de commande domestique ;
la réception (202, 401) de données de qualité d'objet cible à partir d'un appareil domestique configuré pour traiter un objet cible, les données de qualité d'objet cible étant obtenues en réalisant une mesure de qualité sur l'objet cible par l'appareil domestique, et l'appareil domestique comprenant un appareil domestique relié au dispositif de commande domestique, ou un appareil domestique placé dans une région spécifiée où se trouve le dispositif de commande domestique ;
l'envoi (204) d'informations d'invite de commande d'appareil au dispositif de commande domestique en fonction des informations d'adresse du dispositif de commande domestique quand il est déterminé que les données de qualité d'objet cible sont inférieures à un seuil, les informations d'invite de commande d'appareil étant configurées pour inviter un utilisateur du dispositif de commande domestique à mettre en marche l'appareil domestique appartenant à l'utilisateur pour traiter l'objet cible ; dans lequel l'appareil domestique pour traiter l'objet cible est un purificateur d'air (11) pour purifier l'air, ou un purificateur d'eau (12) pour purifier l'eau, dans lequel l'élément d'informations du message de notification comprend en outre des informations d'emplacement géographique d'un domicile de l'utilisateur du dispositif de commande domestique, et d'un type d'appareil d'un appareil domestique dans le domicile ;
dans lequel la détermination que les données de qualité d'objet cible sont inférieures au seuil comprend :
l'acquisition (201) d'une pluralité de données de qualité d'objet cible, les types d'appareils des appareils domestiques correspondant à la pluralité de données de qualité d'objet cible étant identiques, et les informations d'emplacement géographique des domiciles correspondant aux appareils domestiques indiquant que les domiciles se trouvent dans une région spécifiée ;
l'obtention de données de qualité régionales correspondant à la région spécifiée conformément à la pluralité de données de qualité d'objet cible ; et
la détermination que les données de qualité régionales sont inférieures au seuil ;
le procédé comprenant en outre, quand il est déterminé que les données de qualité d'objet cible sont inférieures au seuil :
l'envoi d'une instruction de commande d'appareil à l'appareil domestique, de telle sorte que l'appareil domestique soit commandé conformément à l'instruction de commande d'appareil ; et
l'envoi (403) d'un message de rappel de qualité d'eau à des utilisateurs dans la région quand le serveur en nuage trouve que la qualité de l"eau est médiocre.

2. Procédé selon la revendication 1, dans lequel l'envoi (204) d'informations d'invite de commande d'appareil au dispositif de commande domestique conformément aux informations d'adresse sur le dispositif de commande domestique comprend :
si le domicile de l'utilisateur du dispositif de commande domestique se trouve dans la région spécifiée et qu'aucun appareil domestique n'est relié au dispositif de commande domestique, l'envoi des informations d'invite de commande d'appareil au dispositif de commande domestique quand les données de qualité régionales sont inférieures au seuil, pour inviter l'utilisateur du dispositif de commande domestique à ajouter un appareil domestique.

3. Serveur en nuage, comprenant :
un module de réception de données (61) configuré pour recevoir à partir d'un dispositif de commande domestique un message de notification comprenant un élément d'informations comprenant des informations d'adresse du dispositif de commande domestique, et recevoir des données de qualité d'objet cible à partir d'un appareil domestique configuré pour traiter un objet cible, les données de qualité d'objet cible étant obtenues en réalisant une mesure de qualité sur l'objet cible par l'appareil domestique, et l'appareil domestique comprenant un appareil domestique relié au dispositif de commande domestique, ou un appareil domestique placé dans une région spécifiée où se trouve le dispositif de commande domestique ;
un module de traitement de données (62) configuré pour envoyer des informations d'invite de commande d'appareil au dispositif de commande domestique conformément à l'informations d'adresse du dispositif de commande domestique quand il est déterminé que les données de qualité d'objet cible sont inférieures à un seuil, les informations d'invite de commande d'appareil étant configurées pour inviter un utilisateur du dispositif de commande domestique à mettre en marche l'appareil domestique appartenant à l'utilisateur pour traiter l'objet cible ; le module de traitement de données (62) comprenant :
un module d'acquisition de données (621) configuré pour acquérir une pluralité de données de qualité d'objet cible à partir des données de qualité d'objet cible reçues par le module de réception de données (61), les types d'appareils des appareils domestiques correspondant à la pluralité de données de qualité d'objets cibles étant identiques, et les informations d'emplacement géographique des domiciles correspondant aux appareils domestiques indiquant que les domiciles se trouvent dans une région spécifiée ;
un module de calcul de données (622) configuré pour obtenir des données de qualité régionale correspondant à la région spécifiée conformément à la pluralité de données de qualité d'objet cible, et déterminer que les données de qualité régionale sont inférieures au seuil ; et
un module de notification d'avertissement (623) configuré pour envoyer les informations d'invite de commande d'appareil au dispositif de commande domestique quand le domicile de l'utilisateur du dispositif de commande domestique se trouve dans la région spécifiée, aucun appareil domestique n'est relié au dispositif de commande domestique, et le module de calcul de données (622) détermine que les données de qualité régionale sont inférieures au seuil, pour inviter l'utilisateur du dispositif de commande domestique à ajouter un appareil domestique ;
le module de traitement de données (62) comprenant en outre :
un module de commande d'appareil (624) configuré pour envoyer une instruction de commande d'appareil à l'appareil domestique, de telle sorte que l'appareil domestique soit commandé conformément à l'instruction de commande d'appareil, et envoyer un message de rappel de qualité d'eau à des utilisateurs dans la région où le serveur en nuage trouve que la qualité de l'eau est médiocre.
